# EUROPÄISCHE PATENTSCHRIFT

(11) **EP 2 026 053 B1**
(45) Veröffentlichungstag und Bekanntmachung des Hinweises auf die Patenterteilung: **12.05.2010**
(21) Anmeldenummer: 08153812.6
(22) Anmeldetag: 31.03.2008
(51) Int. Cl.: G01J 5/02, F25D 11/00, F25D 29/00

(54) **Transportcontainer sowie Temperaturmessvorrichtung für einen Transportcontainer**
Transport container and temperature measuring device for a transport container
Conteneur de transport et dispositif de mesure de la température pour un conteneur de transport

(30) Priorität: 09.08.2007 DE 102007037578
(43) Veröffentlichungstag der Anmeldung: 18.02.2009
(73) Patentinhaber: ebro Electronic GmbH & Co. KG, 85055 Ingolstadt (DE)
(72) Erfinder: Klün, Wolfgang, 85049 Ingolstadt (DE)
(74) Vertreter: Schlief, Thomas P.

(56) Entgegenhaltungen:
- US-A- 4 014 178
- US-A- 5 996 357
- US-A1- 2005 058 179

## Beschreibung

Die vorliegende Erfindung betrifft einen Transportcontainer, sog. Isotainer, zum Transport von gekühlten oder tiefgekühlten Lebensmitteln nach dem Oberbegriff des Anspruchs 1. Gleichfalls betrifft die Erfindung eine Temperaturmessvorrichtung für einen Transportcontainer.

Derartige Container werden nahezu überall im Lebensmitteltransportbereich für leicht verderbliche Waren eingesetzt. Die kühlen oder gefrorenen Lebensmittel werden hierzu in thermoisolierten quaderförmigen Containern verfrachtet und zumeist mit Lastkraftwagen zu den einzelnen Verkaufsstätten transportiert.

Zur Sicherstellung der Frische der Waren ist es notwendig, dass diese ununterbrochen gekühlt bzw. gefroren bleiben. Es wird daher am Ende des Transports durch Öffnen der Tür und anschließende Messung kontrolliert, ob die Warentemperatur noch hinreichend niedrig ist.

Die US 4,014,178 beschreibt einen Haushaltskühl- und Gefrierschrank mit einer Temperatursteuereinrichtung, die an der Außenwand des Kühl-/Gefrierschranks angeordnet ist. Hierzu sind Temperaturanzeigen in den Türen des Kühl-/Gefrierschranks vorgesehen, welche die Temperatur innerhalb des Kühl- bzw. Gefrierraums anzeigen. Diese Anzeigen verwendet dann der Bediener, um ggf. über die Temperatursteuerung die Temperatur in dem Kühl- bzw. Gefrierraum ein- oder nachzustellen.

Die US 2005/0058179 A1 offenbart ein Temperatursensorelement als Teil eines Temperatursensors zur Messung der Umgebungstemperatur in einer Umgebung mit erhöhter Luftströmung. Der Sensor ist hierbei in einer Wand eingebaut, welche erhöhten Schutz für empfindliche elektronische Elemente bietet. Das Sensorelement hat keinen direkten Kontakt mit der Luft. Vielmehr erwärmt die Luft die das Sensorelement umgebenden Kunststoffteile, welche die Wärme an das Sensorelement weiterleiten.

Die US 5,996,357 beschreibt ein System zur Überprüfung der Innentemperatur eines Kühlschranks. An der Außenseite des Kühlschranks ist ein Thermochromelement angeordnet, wobei Wärme von der Innenseite des Kühlschranks über ein in einer Wanddurchbrechung angeordnetes Wärmeleitelement zu diesem Thermochromelement übertragen wird. Je nach Temperatur im Innenraum des Kühlschranks wechselt das Thermochromelement seine Farbe. Eine Messung der Temperatur von im Inneren eines Transportcontainer gelagerten Kühl- bzw. Gefrierwaren ist mit dieser Vorrichtung nicht möglich.

Es ist Aufgabe der Erfindung, die Temperaturmessung von transportierten Kühl- und Gefrierwaren zu verbessern.

Diese Aufgabe wird bei dem Transportcontainer der eingangs genannten Art durch die Merkmale des Anspruchs 1 gelöst. Gleichfalls wird diese Aufgabe bei einer Temperaturmessvorrichtung durch die Merkmale des Anspruchs 19 gelöst.

Die Vorteile der Erfindung sind insbesondere darin zu sehen, dass aufgrund der Verwerdung eines Temperatursensors präzise Temperaturmessungen über lange Zeiträume bzw. zu beliebigen Zeiten durchgeführt werden können. Die Temperaturmessvorrichtung kann beispielsweise derart ausgestaltet sein, dass jederzeit eine Kontrolle der Temperatureinhaltung möglich ist. Betrugsversuche können hierdurch verhindert werden. Dem Anspruch der Verbraucher auf einwandfreie Lebensmittel kann in besonders zuverlässiger Weise entgegen gekommen werden.

Erfindungsgemäß ist der Temperatursensor als Infrarotsensor ausgebildet. Es wird hierbei ausgenutzt, dass bei geschlossener Containertür kein Licht in den Container eindringen kann. Der Infrarotsensor misst daher nur die IR-Abstrahlung der Körper im Container, also der Waren und der Wände, nicht jedoch Störeffekte durch Licht oder andere elektromagnetische Quellen. Die hieraus resultierenden präzisen Messwerte schaffen eine große Verlässlichkeit.

Erfindungsgemäß korrigiert eine Aufbereitungselektronik die vom Temperatursensor gemessenen Werte hinsichtlich eines möglichen Offsets. Hierzu ist mindestens eine Korrekturkurve in der Aufbereitungselektronik hinterlegt, wobei zu deren Erstellung zuvor mit mehreren an unterschiedlichen Orten an einer Ware angebrachten Sensoren die lokalen Temperaturveränderungen über einen Zeitraum von mehreren Stunden gemessen wurden. Es wurden hierzu sowohl die von den jeweiligen Sensoren ermittelten Einzeltemperaturen als auch die mittlere Temperatur an einer anfangs auf -20 °C gekühlten, in einem Container platzierten Ware ermittelt. Gleichzeitig wurden auch mittels der erfindungsgemäßen Temperaturmessvorrichtung die entsprechenden Temperaturwerte gemessen. Ein Vergleich zwischen diesen Temperaturwerten und bevorzugt den mittleren Temperaturwerten liefert verschiedene Offset-Werte für verschiedene gemessene Temperaturen der erfindungsgemäßen Temperaturmessvorrichtung. Der angezeigte Wert ist dann bevorzugt die um den Offset korrigierte Temperatur.

Misst beispielsweise der erfindungsgemäß eingesetzte Temperatursensor eine Temperatur von -17,5 °C, wird dieser mit der entsprechenden Korrekturkurve bei einem Offset von 1 °C auf -18,5 °C korrigiert.

Vorzugsweise sind verschiedene Korrekturkurven für verschiedene Temperaturbereiche hinterlegt, beispielsweise eine für den Frischfleischbereich (z.B. für Temperaturwerte von -2°C bis +2°C) und eine für Tiefkühlwaren (z.B. für Temperaturwerte zwischen -33°C bis -18 °C).

Als weiterer Vorteil der erfindungsgemäßen Temperaturmessvorrichtung kommt die Möglichkeit hinzu, auf einer Anzeigeeinrichtung, die vorzugsweise auf der Wandaußenseite vorgesehen ist, insbesondere die aktuellen und/oder bisher erreichten Höchsttemperaturen abzulesen. Alternativ oder zusätzlich ist es möglich, eine während des Transportes erfolgte Grenzwertüberschreitung anzuzeigen, beispielsweise mittels eines roten Warnlichtes: Nur falls die Kühlraumtemperatur auf dem Transportweg zu jeder Zeit unterhalb der gewünschten Temperatur gelegen hat, wird vorzugsweise dies mit einer grünen Lampe auf der Anzeigeeinrichtung angezeigt. Hiermit wird eine Möglichkeit geschaffen, dass der die Waren in Empfang nehmende Lebensmittelmarktbeauftragte schnell und verlässlich eine Transportkontrolle durchführen kann.

Bei einer bevorzugten Ausführung ist in einer Seitenwand des Containers eine Durchbrechung vorgesehen, wobei der Temperatursensor mit der Durchbrechung gekoppelt ist, d.h. mit der Durchbrechung - vorzugsweise fest - verbunden ist.

Besonders bevorzugt ist der Temperatursensor in der besagten Durchbrechung angeordnet, um es insbesondere sicher und platzsparend in der Durchbrechung zu befestigen.

Bei Ausbildung des Temperatursensors als Infrarotsensor ist gemäß einer bevorzugten Weiterbildung sogar die Linse des Infrarotsensors in der Durchbrechung angeordnet. In diesem Fall ragt das Thermometer nicht in den Kühlraum hinein, so dass eine Beschädigung ausgeschlossen ist.

Zudem ergibt sich hierdurch eine äußerst kompakte Anordnung der Temperaturmessvorrichtung, in diesem Fall im Wesentlichen bestehend aus Temperatursensor und Anzeigeeinrichtung. Ein weiterer Schutz kann durch eine vor der Linse angeordnete Abdeckung realisiert werden, die für IR-Strahlung durchlässig ist. Eine solche Abdeckung kann beispielsweise ein Siliziumfilter sein, der für IR-Strahlung im Wellenlängenbereich von ca. 8-14 µm durchlässig ist.

Um die Anzeigeeinrichtung vor Beschädigung bei der Beförderung des Transportcontainers zu schützen, ist diese vorteilhafterweise in einer Mulde der Außenwand des Containers angeordnet. Hierbei ragt sie bevorzugt nicht über die Mulde hinaus nach außen, so dass die Anzeigeeinrichtung auch bei dicht nebeneinander stehenden Containern geschützt ist. Die Mulde kann speziell den Außenmaßen der Anzeigeeinrichtung angepasst sein. Gemäß einer Alternative kann auch die schon vorhandene Mulde für den Türgriff als Anbringungsort genutzt werden.

Besonders bevorzugt sind der Temperatursensor und die Anzeigeeinrichtung an einer Halteeinrichtung angeordnet, welche in die Durchbrechung eingeschoben ist. Somit sind sowohl Temperatursensor als auch Anzeigeeinrichtung in der Durchbrechung fixiert. Wenn zudem die Halteeinrichtung einstückig ausgebildet ist, vereinfacht sich die Vormontage der Messeinrichtung. Die Anzeigeeinrichtung kann beispielsweise auf die Halteeinrichtung aufgesteckt und der Temperatursensor mit der Halteeinrichtung eingegossen, verklebt, verschraubt oder anders befestigt werden.

Gemäß einer diesbezüglich vorteilhaften Ausführungsform der Erfindung weist die Halteeinrichtung einen hohlen Ansatz auf, wobei insbesondere der Temperatursensor in dem Ansatz befestigt ist, vorzugsweise eingegossen oder eingeklebt. Der Ansatz kann dann in die Durchbrechung eingeschoben werden.

Zur dauerhaft lagegenauen Positionierung der Temperaturmesseinrichtung in der Containerwand ist die Halteeinrichtung besonders bevorzugt mittels einer Sicherung in der Durchbrechung gelagert. Hierbei ist es vorteilhaft, wenn die Halteeinrichtung und die Sicherung abstandsveränderlich zueinander in der Seitenwand angeordnet sind.

Es bietet sich hierbei beispielsweise eine Schraubverbindung von Halteeinrichtung und Sicherung an. Die Sicherung ist hierbei vorzugsweise als Überwurfmutter ausgebildet. Die Halteeinrichtung kann dann vorzugsweise von der Wandaußenseite in die Durchbrechung eingeschoben und die Überwurfmutter von der Wandinnenseite auf ein Gewinde am freien Ende der Halteeinrichtung aufgeschraubt werden.

Insbesondere bei der vorgenannten Ausführungsform kann einer Abstandsveränderung von Innen- und Außenhaut der Seitenwand, in denen der Temperatursensor bzw. die Anzeigeeinrichtung angebracht sind, begegnet werden. Wenn beispielsweise aufgrund von Schrumpfung des innenliegenden Isoliermaterials die Innen- und Außenhaut eine veränderte Lage zueinander einnehmen, kann die Schraubverbindung weiter angezogen werden, so dass der Abstand von Temperatursensor und Anzeigeeinrichtung abnimmt und die besagte Schrumpfung des Isoliermaterials ausgeglichen wird. Hierdurch wird eine sichere Lagerung von der Mess- und Anzeigeeinrichtung auch über längere Zeiten erreicht.

Bei einer diesbezüglich vorteilhaften Ausführungsform ist die Sicherung drehbar an der Innenseite der Seitenwand angeordnet, während die Halteeinrichtung mit der Anzeigeeinrichtung und dem Temperatursensor drehfest an der Außenseite der Seitenwand vorgesehen ist. Auf diese Weise bleibt die Orientierung der Anzeigeeinrichtung und damit auch das Display zum Ablesen von insbesondere der Temperatur erhalten, während die Sicherung weiter in die Durchbrechung hinein oder hinaus geschraubt werden kann, um die Lagesicherung der Messeinrichtung zu gewährleisten.

Bei einer weiteren Ausführungsform der Erfindung sind der Temperatursensor auf der Wandinnenseite in einer ersten Aufnahme und die Anzeigeeinrichtung auf der Wandaußenseite in einer zweiten Aufnahme angeordnet. Beide Aufnahmen, die demnach zusammen eine Halteeinrichtung bilden, sind miteinander über Verbindungsmittel gekoppelt, vorzugsweise lösbar. Die erste Aufnahme mit dem Temperatursensor wird hierbei vorzugsweise von der Innenseite in die Durchbrechung und - nach elektrischer Verbindung - die zweite Aufnahme mit der Anzeigeeinrichtung von außen in die Durchbrechung geschoben. Anschließend werden die beiden Aufnahmen miteinander gekoppelt.

Zur Abspeicherung der mit vorzugsweise konstantem zeitlichem Abstand gemessenen Temperaturwerte im Kühlraum ist der Temperatursensor bevorzugt mit einem Datenlogger verbunden. Der Datenlogger kann beispielsweise bei Anlieferung des Transportcontainers am Zielort ausgelesen werden. Die Daten können dann z.B. über ein Netzwerk an eine Zentrale gesendet werden.

Zusätzlich oder alternativ zu der genannten Anzeigeeinrichtung kann ein Funkmodul mit dem Temperatursensor und/oder dem Datenlogger verbunden sein. Die Daten vom Temperatursensor bzw. vom Logger werden dann von einer beispielsweise außen am Container befestigten Antenne zu einer Empfangsstation gesendet, z.B. an einen nahen Empfänger (z.B. einem Computer in dem angefahrenen Lebensmittelmarkt) oder über eine Fernfunkübertragung, z.B. das Internet, an eine Zentrale o.ä. geschickt. Auch ist es möglich, durch Nah- oder Fernabfrage den aktuellen Temperaturwert, Daten aus dem Logger und/oder das Vorliegen einer Temperatur-Grenzwertüberschreitung abzufragen.

Gemäß einer vorteilhaften Weiterbildung basiert das Funkmodul auf der WLAN-, Bluetooth-, Wibree- oder ZigBee-Technologie oder ist als aktiver oder passiver RFID-Transponder ausgebildet. Ein Auslesen von RFID-Transpondern kann beispielsweise mittels eines tragbaren Geräts erfolgen, das ein Bediener bei der Anlieferung des Containers in einem Lebensmittelmarkt bei sich führt. Der Bediener fragt dann die relevanten Temperaturdaten ab, wobei im Falle eines passiven RFID-Transponders die notwendige Energie von dem tragbaren Abfragegerät berührungslos übertragen werden. Es ist denkbar, dass dann lediglich der aktuelle Temperaturwert abgefragt wird. Wenn ein vorhandener Datenlogger in zeitlichen Abständen Messdaten vom Sensor erhalten hat, kann auch dieser Datenlogger mittels dem passiven oder aktiven RFID-Transponder ausgelesen werden. Der Temperatursensor und der Logger besitzen vorteilhafterweise jeweils eine eigene Energieversorgung.

Es ist nicht nur eine Abfrage am Zielort möglich, sondern auch zu beliebigen Zeiten während des Transports, solange ein solches Abfragegerät verwendet wird. Da bei Überschreiten einer Grenzwerttemperatur eine Abkühlung ohne erneute Kältezufuhr nicht möglich ist, reicht für eine Minimalüberprüfung im Grunde die Abfrage am Zielort. Wenn bis dahin der Grenzwert nicht überschritten wurde, ist in der Regel davon auszugehen, dass die Ware vom Einladen bis zum Abfragezeitpunkt nicht den kritischen Temperaturwert überschritten hat.

Wenn ein aktiver RFID-Transponder mit eigener Energieversorgung gewählt wird, können kontinuierlich Messdaten übertragen werden und das Abfragegerät muss nicht selbst Energie für den Transponder bereitstellen.

Vorteilhafte Weiterbildungen der Erfindung sind durch die Merkmale der Unteransprüche gekennzeichnet.

Im Folgenden wird die Erfindung anhand von Zeichnungen näher erläutert, wobei gleiche Bezugszeichen gleiche Teile bzw. Elemente beschreiben. Es zeigen:
- **Figur 1**: eine perspektivische Ansicht eines Transportcontainers;
- **Figur 2**: eine Seitenansicht einer Temperaturmessvorrichtung;
- **Figur 3**: eine geschnittene Seitenansicht der Temperaturmessvorrichtung der Figur 2, eingebaut in eine Containerwand;
- **Figur 4**: eine Vorderansicht der Anzeigeeinrichtung der Temperaturmessvorrichtung;
- **Figur 5**: eine Vorderansicht des Infrarot-Thermometers der Temperaturmessvorrichtung, und
- **Figur 6**: ein schematisches Blockschaltbild.

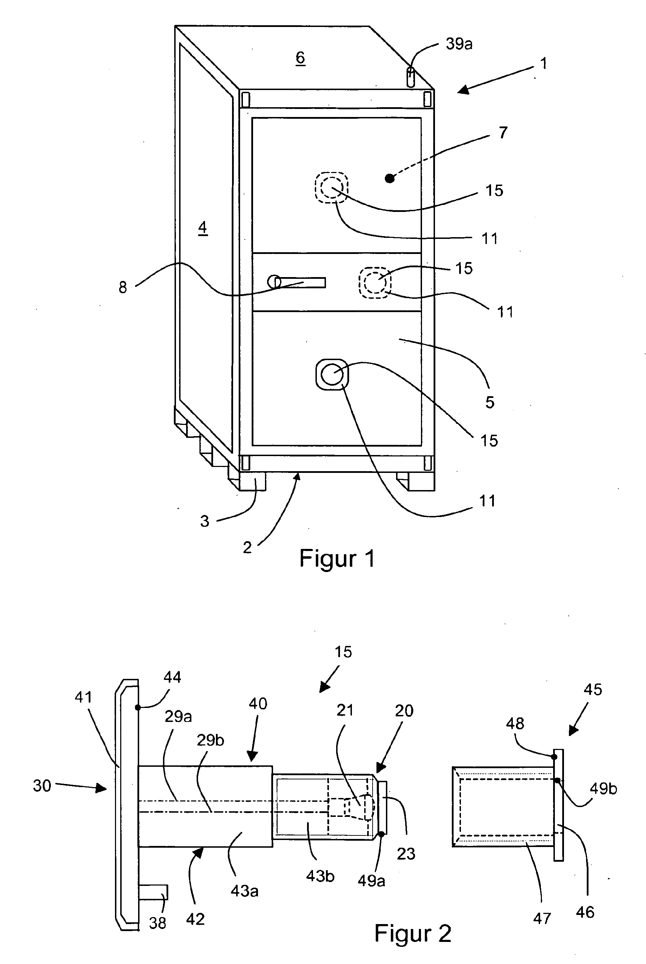

In der Figur 1 ist ein thermoisolierter quaderförmiger Transportcontainer 1, sog. Isotainer, herkömmlicher Bauart in perspektivischer Ansicht dargestellt. Mehrere derartige Container 1 werden üblicherweise in einem Lastwagen von einer Produktionsstätte oder einem Zwischenlager zu einem Zielmarkt befördert. Der Container 1 weist eine Bodenwand 2 auf, unter der Standfüße 3 zum Transportieren des Containers 1 mittels Gabelstapler befestigt sind. Von der Bodenwand 2 ragen vier Seitenwände 4, 5 auf, von denen die vordere Seitenwand 5 als schwenkbare Tür ausgebildet ist, welche mit einem zurückversetzten Griff 8 geöffnet werden kann. Nach oben wird der Container 1 von einer Deckenwand 6 begrenzt. Die Wände 2, 4, 5, 6 umschließen einen Kühlraum 7, in den üblicherweise passive Kühlaggregate, z.B. Eutektika, (nicht dargestellt) eingebracht sind, zumeist unterhalb der Deckenwand 6. Statt Standfüßen können auch Rollen unter dem Container 1 angebracht sein.

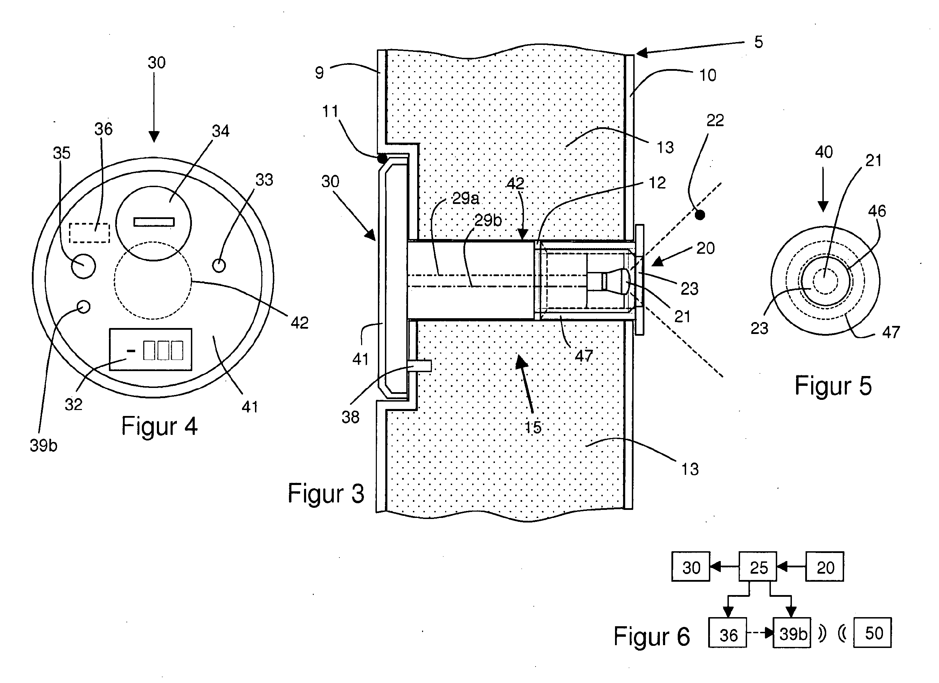

In der unteren Hälfte der Tür 5 ist eine erfindungsgemäße Temperaturmessvorrichtung 15 angeordnet, da zumindest in aller Regel dort der Kühlraum 7 mit Transportgut beladen ist. Wie den Figuren 2 und 3 zu entnehmen ist, weist die Temperaturmessvorrichtung 15 einen als Temperatursensor ausgebildeten Infrarotsensor 20 auf der dem Kühlraum 7 abgewandten Seite und auf der Wandaußenseite eine Anzeigeeinrichtung 30 auf. Sowohl Infrarotsensor 20 als auch Anzeigeeinrichtung 30 sind an einer Halteeinrichtung 40 befestigt, die ihrerseits mit der Tür 5 gekoppelt ist, wie weiter unten im Zusammenhang mit der Figur 3 erläutert wird.

Der Infrarotsensor 20 umfasst eine Linse 21 zum Empfang von IR-Strahlung innerhalb eines Empfangskegels 22 aus dem bei geschlossener Tür 5 dunklen Kühlraum 7. Vor der Linse ist ein für IR-Strahlung durchlässiger Siliziumfilter 23 angebracht. Der Infrarotsensor 20 misst die IR-Strahlung und liefert nach Aufbereitung in einer nicht dargestellten Messelektronik (s. aber Figur 6) ein elektrisches Ausgangssignal, das der Temperatur im Inneren des geschlossenen Kühlraums entspricht, der selbst keine eigene Lichtquelle aufweist. Daher empfängt die Linse 21 lediglich die IR-Strahlung des Kühl- bzw. Gefrierguts und den Kühlraumwänden. Somit ist eine präzise Aussage über die Temperatur des Kühl- bzw. Gefrierguts möglich.

Weiterhin zeigt die Figur 4 schematisch, dass die Anzeigeeinrichtung 30 ein Display 32 zum Ablesen der Temperatur sowie eine Rot-/Grün-Leuchte 33 aufweist, die bei einer Temperatur-Grenzwertüberschreitung von Grün auf permanentes Rot wechselt. Weiterhin ist zur Stromversortung des Infrarotsensors 20, der Aufbereitungs- und ggf. Auswerteelektronik und der Anzeigeeinrichtung 30 ein Batteriefach 34 zur Aufnahme einer Batterie bzw. eines Akkumulators vorhanden. Demgemäß führt eine Spannungsversorgungsleitung 29a zum Infrarotsensor 20. Des weiteren ist eine Signalleitung 29b für - ggf. aufbereitete - Messwerte von dem Infrarotsensor 20 zur Anzeigeeinrichtung 30 vorhanden. Auch ist eine ggf. mehrfach belegte Taste 35 vorgesehen, mittels derer ein Bediener insbesondere Temperatur-Messdaten abfragen kann, die dann auf dem Display 32 angezeigt werden. Auch können mittels der Taste 35 Temperaturgrenzwerte eingegeben werden.

In der Figur 3 ist die in der Tür 5 eingebaute Temperaturmessvorrichtung 15 dargestellt. Die Tür 5 weist bekanntermaßen eine Außenhaut 9 und eine Innenhaut 10 auf, zwischen denen ein thermisches Isolationsmaterial 13, z.B. ein PU-Schaum, eingebracht ist. In der Tür 5 ist eine durchgehende zylindrische Durchbrechung 12 vorgesehen, in die von der Außenseite die Halteeinrichtung 40 mitsamt dem Infrarotsensor 20 und der Anzeigeeinrichtung 30 eingeschoben ist. Die Anzeigeeinrichtung 30 lager hierbei in einer Mulde 11 der Tür 5. Hierdurch wird das Zerstörungsrisiko der Anzeigeeinrichtung 30 beim Transport von insbesondere mehreren, dicht beieinander befindlichen Containern 1 minimiert.

Die Halteeinrichtung 40 weist des weiteren - ausgehend von der Anzeigeeinrichtung 30 - einen Ansatz 42 mit einem verbreiterten Schaft 43a und einem schmaleren, hohlen Endstück 43b mit Außengewinde auf. In dem Endstück 43b ist der Infrarotsensor 20 eingebettet, beispielsweise eingegossen oder eingeklebt.

Von der Kühlraumseite ist eine als Überwurfmutter konzipierte Sicherung 45 in die Durchbrechung 12 eingesetzt. Halteeinrichtung 40 und Sicherung 45 weisen jeweils miteinander korrespondierende Schraubgewinde an ihrem Endstück 43b bzw. ihrem Schaft 47 auf, so dass die Messeinrichtung 15 bei geeignetem Verschrauben ohne Axialspiel in der Durchbrechung 12 gelagert werden kann.

Die Überwurfmutter bzw. Sicherung 45 weist an ihrer Stirnseite eine Öffnung 46 auf, durch welche der Siliziumfilter 23 des Infrarotsensors 20 passgenau hindurchragt, wenn die Sicherung 45 auf die Halteeinrichtung 40 aufgeschraubt ist.

Damit die Anzeigevorrichtung 30 stets lagefest und damit das Display 32 immer waagerecht angeordnet sind, ist ein nach innen ragender Vorsprung 38 an einem Gehäuse 41 der Anzeigeeinrichtung 30 vorgesehen, der in eine Ausnehmung in der Außenhaut 9 eingreift und damit ein Verdrehen der Anzeigevorrichtung 30 beim Verschrauben verhindert. Beim Aufdrehen der Sicherung 45 auf die Halteeinrichtung 40 dreht sich daher nur die Sicherung 45.

Um zu verhindern, dass Feuchtigkeit, Gase o.ä. in die Messeinrichtung 15 oder durch die Durchbrechung 12 dringen, sind verschiedene Dichtungsstellen vorgesehen (s. Figur 2): Eine Dichtung 44 ist am Anlageabschnitt von Gehäuse 41 und Außenhaut 9 vorgesehen, eine weitere Dichtung 48 am Anlageabschnitt von Sicherung 45 und Innenhaut 10. Weiterhin ist eine Dichtung 49a, 49b im Durchtrittsbereich des Siliziumfilters 23 durch die Öffnung 46 der Sicherung 45 angeordnet. Die Dichtungen 44, 48, 49a, 49b sind als Filmdichtungen, O-Ringe o.ä. ausgebildet.

Die Anzeigeeinrichtung 30 weist eine nicht näher dargestellte Elektronik auf, die imstande ist, den aktuellen Temperaturwert und/oder den während des Transport bisher erreichten höchsten Temperaturwert anzuzeigen. Eine entsprechende Auswahl erfolgt über die Taste 35. Selbstverständlich können auch mehrere Tasten vorhanden sein. Mehrere Displays sind ebenfalls möglich. Auch kann die besagte Elektronik derart ausgebildet sein, eine Überschreitung einer festgelegten oder festlegbaren bzw. wählbaren Temperatur (7° C bei beispielsweise Molkereiprodukten, -18° C bei Gefriergut) anzuzeigen, vorteilhafterweise über die Rot-/Grün-Leuchte 33.

Bei einer alternativen Ausführungsform ist - wie in Figur 1 angedeutet - zusätzlich zu der Anzeigeeinrichtung 30 ein mit ihr verdrahtetes oder berührungslos verbundenes Funkmodul 39a, welches beispielsweise auf der WLAN-, Bluetooth-, Wibree- oder ZigBee-Technologie basiert, vorhanden, welches den aktuellen Temperaturwert, im Logger 36 gespeicherte Daten und/oder das Vorliegen einer Grenzwertüberschreitung (bzw. die Einhaltung der ordnungsgemäßen Temperatur) als Ja/Nein- bzw. Rot/Grün-Signal an einen Empfänger übermittelt, beispielsweise an einen Computer des angefahrenen Lebensmittelmarktes oder an eine Zentrale. Das Funkmodul kann auch in die Halteeinrichtung 40 integriert sein bzw. mit dem Infrarotsensor 20 oder der Anzeigeeinrichtung 30 verbunden sein. Alternativ ist ein aktiver oder passiver RFID-Transponder 39b (schematisch angedeutet in Figur 4) mit dem Infrarotsensor 20 verbunden, um Daten wie die zuvor genannten berührungslos zu übertragen.

In der Figur 6 ist ein entsprechendes Blockschaltbild dargestellt. Der Temperatursensor 20 ist mit einer Aufbereitungselektronik 25, die auch ggf. Auswertealgorithmen durchführen kann, verbunden. Die Elektronik 25 ist ihrerseits mit der Anzeigeeinrichtung 30 verbunden, deren einzelne Elemente nicht dargestellt sind. Die Elektronik 25 ist zudem mit einem Datenlogger 36 sowie einem aktiven oder passiven RFID-Transponder 39b verbunden. Optional kann der RFID-Transponder 39b auch Daten aus dem Logger 36 erhalten. Der RFID-Transponder 39b kommuniziert mit einem externen Gerät 50, das die Daten aus der Elektronik 25 oder dem Logger 36 abruft. Das Gerät 50 kann beispielsweise ein elektronisches tragbares Abfragegerät (Handheld) sein, das von einem Bediener von Container zu Container zum Abfragen aktueller und/oder früherer Temperaturdaten getragen wird. Der Logger 36 kann gleichfalls einen Anschluss aufweisen, an den ein Auslesegerät mittels eines Übertragungskabels angeschlossen werden kann. Der Temperatursensor 20, der Logger 36 und der RFID-Transponder 39b (wenn dieser als aktiver RFID-Transponder ausgebildet ist) weisen jeweils eine eigene, der Übersichtlichkeit halber nicht dargestellte Energieversorgung, beispielsweise in Form von Knopfbatterien, auf.

Die Aufbereitungselektronik 25 addiert oder subtrahiert vorteilhafterweise zu bzw. von den gemessenen Werten einen Offset, der aus mindestens einer hinterlegten Korrekturkurve entnommen ist. Die Korrekturkurve wurde in vorherigen Messungen mit einer Vielzahl von unterschiedlich auf einer definiert gekühlten bzw. gefrorenen Ware platzierten Sensoren ermittelt und der zeitliche Temperaturverlauf der sich langsam erwärmenden Ware gemessen. Die Ware war hierzu in einen Isocontainer eingebracht. Um eine Korrelation mit der erfindungsgemäßen Temperaturmessvorrichtung zu erhalten, wurden gleichzeitig auch mit dieser die Messwerte ermittelt. Ein Vergleich zwischen den mittleren Temperaturwerten der Vielzahl auf der Ware platzierten Sensoren mit den Temperaturwerten der erfindungsgemäßen Temperaturmessvorrichtung liefert die Offset-Werte für verschiedene gemessene Temperaturen der erfindungsgemäßen Temperaturmessvorrichtung. Im täglichen Einsatz zeigt das Display 32 bevorzugt die um den Offset korrigierte Temperatur an.

Vorzugsweise sind verschiedene Korrekturkurven für verschiedene Temperaturbereiche hinterlegt, beispielsweise eine für den Frischfleischbereich (z.B. für Temperaturwerte von -2°C bis +2°C) und eine für Tiefkühlwaren (z.B. für Temperaturwerte zwischen -33°C bis -18 °C).

Einer leichteren Ablesbarkeit kommt es zugute, wenn - wie in Figur 1 angedeutet - die Temperaturmessvorrichtung 15 in der oberen Hälfte der Tür 5 angeordnet ist. Allerdings sollte dann für eine präzise Messung der Kühlraum 7 fast ausgefüllt sein, damit auch tatsächlich die Temperatur der transportierten Waren gemessen wird. Auch eine Anordnung im muldenförmigen Griffbereich der Tür 5 ist denkbar, wie ebenfalls in der Figur 1 angedeutet.

Auch schon vorhandene Transportcontainer sind in einfacher Weise mit der erfindungsgemäßen Temperaturmessvorrichtung nachrüstbar. Hierzu ist lediglich eine Durchbrechung 12 in einer Containerwand vorzusehen, um die Messeinrichtung 15 dort zu befestigen.

## Patentansprüche

1. Transportcontainer zum Transport von gekühlten oder tiefgekühlten Lebensmitteln, sog. Isotainer, mit einer Bodenwand (2), Seitenwänden (4, 5) und einer Deckenwand (6) und mindestens einem von den Wänden (2, 4, 5, 6) eingeschlossenen Kühlraum (7), wobei eine Seitenwand als Tür (5) ausgebildet ist zum Bestücken und Entleeren des Kühlraums (7), **dadurch gekennzeichnet, dass** eine Temperaturmessvorrichtung (15) mit einem Infrarotsensor (20) auf der dem Kühlraum (7) zugewandten Seite angeordnet ist zum Empfang von IR-Strahlung von im Kühlraum (7) gelagertem Kühl- und Gefriergut, und dass eine Aufbereitungselektronik (25) vorgesehen ist, welche die von dem Infrarotsensor (20) gemessenen Temperatur-Messwerte mittels mindestens einer hinterlegten Korrekturkurve bezüglich eines Temperatur-Offsets korrigiert.

2. Transportcontainer nach Anspruch 1, **dadurch gekennzeichnet, dass** der Infrarotsensor (20) in einer Durchbrechung (12) in einer Containerwand (2, 4, 5, 6) angeordnet ist.

3. Transportcontainer nach Anspruch 2, **dadurch gekennzeichnet, dass** die Linse (21) des Infrarotsensors (20) in der Durchbrechung (12) angeordnet ist.

4. Transportcontainer nach einem der vorhergehenden Ansprüche, **dadurch gekennzeichnet, dass** die Temperaturmessvorrichtung (15) eine Anzeigeeinrichtung (30) an der Wandaußenseite (9) umfasst, wobei eine Signalleitung (29b) vom Infrarotsensor (20) durch eine Durchbrechung (12) in einer Containerwand (2, 4, 5, 6) zur Anzeigeeinrichtung (30) führt.

5. Transportcontainer nach einem der vorhergehenden Ansprüche, **dadurch gekennzeichnet, dass** die Anzeigeeinrichtung (30) in einer Mulde (11) an der Wandaußenseite (9) angeordnet ist.

6. Transportcontainer nach einem der vorhergehenden Ansprüche, **dadurch gekennzeichnet, dass** der Infrarotsensor (20) und die Anzeigeeinrichtung (30) an einer Halteeinrichtung (40) angeordnet sind, die zumindest teilweise in eine Durchbrechung (12) in einer Containerwand (2, 4, 5, 6) eingeschoben ist.

7. Transportcontainer nach Anspruch 6, **dadurch gekennzeichnet, dass** die Halteeinrichtung (40) einen zumindest teilweise hohlen Ansatz (42) aufweist, dass dieser Ansatz (42) in die Durchbrechung (12) eingeschoben ist, und dass der Infrarotsensor (20) und/oder die Anzeigeneinrichtung (30) in dem Ansatz (42) angeordnet sind.

8. Transportcontainer nach einem der vorhergehenden Ansprüche, **dadurch gekennzeichnet, dass** die Halteeinrichtung (40) mittels einer Sicherung (45) in der Durchbrechung (12) gelagert ist.

9. Transportcontainer nach Anspruch 8, **dadurch gekennzeichnet, dass** die Sicherung (45) als Überwurfmutter ausgebildet ist.

10. Transportcontainer nach einem der vorhergehenden Ansprüche, **dadurch gekennzeichnet, dass** die Halteeinrichtung (40) und die Sicherung (45) abstandsveränderlich zueinander in der Seitenwand (5) angeordnet sind.

11. Transportcontainer nach einem der vorhergehenden Ansprüche, **dadurch gekennzeichnet, dass** die Sicherung (45) drehbar an der Innenseite der Seitenwand (5) und dass die Halteeinrichtung (40) drehfest in der Durchbrechung (12) angeordnet ist.

12. Transportcontainer nach einem der vorhergehenden Ansprüche, **dadurch gekennzeichnet, dass** die Halteeinrichtung zwei Aufnahmen umfasst, wobei der Infrarotsensor (20) in einer ersten Aufnahme und die Anzeigeeinrichtung (30) in einer zweiten Aufnahme angeordnet sind, wobei die erste und die zweite Aufnahme miteinander verbindbar sind.

13. Transportcontainer nach einem der vorhergehenden Ansprüche, **dadurch gekennzeichnet, dass** die Messeinrichtung (15) in der Tür (5) angeordnet ist.

14. Transportcontainer nach einem der vorhergehenden Ansprüche, **dadurch gekennzeichnet, dass** ein Datenlogger (36) mit dem Infrarotsensor (20) verbunden ist zur Abspeicherung von zeitlich nacheinander aufgenommenen Messwerten.

15. Transportcontainer nach einem der vorhergehenden Ansprüche, **dadurch gekennzeichnet, dass** ein Funkmodul (39a; 39b) mit dem Infrarotsensor (20) und/oder dem Datenlogger (36) verbunden ist.

16. Transportcontainer nach einem der vorhergehenden Ansprüche, **dadurch gekennzeichnet, dass** der aktuelle Temperaturwert auf einem Display (32) der Temperaturanzeigeeinrichtung (30) anzeigbar ist.

17. Transportcontainer nach einem der vorhergehenden Ansprüche, **dadurch gekennzeichnet, dass** der nach Beladen und Schließen des Kühlraums (7) erreichte höchste Temperaturwert anzeigbar ist.

18. Transportcontainer nach einem der vorhergehenden Ansprüche, **dadurch gekennzeichnet, dass** eine Temperaturgrenzwert-Überschreitung anzeigbar ist.

19. Temperaturmessvorrichtung zur Messung der Temperatur im Kühlraum (7) eines Transportcontainers (1), mit einem Infrarotsensor (20), der zum Empfang von IR-Strahlung von im Kühlraum (7) gelagertem Kühl- und Gefriergut ausgebildet ist, mit einer Anzeigeeinrichtung (30) zur Anordnung an einer Wandaußenseite (9) des Containers (1) sowie einer vom Infrarotsensor (20) zur Anzeigeeinrichtung (30) führenden Signalleitung (29b), wobei eine Aufbereitungselektronik (25) vorgesehen ist, welche die von dem Infrarotsensor (20) gemessenen Temperatur-Messwerte mittels mindestens einer hinterlegten Korrekturkurve bezüglich eines Temperatur-Offsets korrigiert.

20. Temperaturmessvorrichtung nach Anspruch 19, **dadurch gekennzeichnet, dass** der Infrarotsensor (20) und die Anzeigeeinrichtung (30) in einer Halteeinrichtung (40) angeordnet sind, die in eine Durchbrechung (12) in einer Wand (5) des Transportcontainers (1) einbringbar ist.

21. Temperaturmessvorrichtung nach Anspruch 20, **dadurch gekennzeichnet, dass** die Halteeinrichtung (40) den Infrarotsensor, insbesondere ausgebildet als Infrarotsensor (20), und die Anzeigeeinrichtung (30) gemeinsam aufnimmt.

22. Temperaturmessvorrichtung nach Anspruch 21, **dadurch gekennzeichnet, dass** die gemeinsame Halteeinrichtung (40) mit einer Sicherung (45) in der Durchbrechung (12) befestigt ist.

23. Temperaturmessvorrichtung nach Anspruch 22, **dadurch gekennzeichnet, dass** die Halteeinrichtung (40) und die Sicherung (45) lösbar miteinander verbindbar sind.

24. Temperaturmessvorrichtung nach Anspruch 23, **dadurch gekennzeichnet, dass** die Verbindung als Schraubverbindung ausgebildet ist.

25. Temperaturmessvorrichtung nach einem der Ansprüche 19-24, **dadurch gekennzeichnet, dass** die Halteeinrichtung zwei getrennte, miteinander koppelbare Aufnahmen für jeweils den Infrarotsensor (20) und die Anzeigeeinrichtung (30) umfasst.

26. Temperaturmessvorrichtung nach einem der Ansprüche 19-25, **gekennzeichnet durch** einen Datenlogger (36), der mit dem Infrarotsensor (20) verbunden ist, zur Abspeicherung von zeitlich nacheinander aufgenommenen Messwerten.

27. Temperaturmessvorrichtung nach einem der Ansprüche 19-26, **dadurch gekennzeichnet, dass** ein Funkmodul (39a; 39b) mit dem Infrarotsensor (20) und/oder dem Datenlogger (36) verbunden ist.

28. Temperaturmessvorrichtung nach einem der Ansprüche 19-27, **dadurch gekennzeichnet, dass** die Anzeigeeinrichtung (30) zur Anzeige des aktuellen Temperaturwertes ausgebildet ist.

29. Temperaturmessvorrichtung nach einem der Ansprüche 19-28, **dadurch gekennzeichnet, dass** die Anzeigeeinrichtung (30) zur Anzeige des nach Beladen und Schließen des Kühlraums (7) erreichten höchsten Temperaturwertes ausgebildet ist.

30. Temperaturmessvorrichtung nach einem der Ansprüche 19-29, **dadurch gekennzeichnet, dass** die Anzeigeeinrichtung (30) zur Anzeige einer Temperaturgrenzwert-Überschreitung ausgebildet ist.

## Claims

1. A shipping container for shipping refrigerated or deep-frozen foods, known as an isotainer, having a floor (2), side walls (4, 5), and a ceiling (6) and at least one cooling chamber (7) enclosed by the walls (2, 4, 5, 6), one side wall being designed as a door (5) for loading and emptying the cooling chamber (7), **characterized in that** a temperature measurement device (15) having an infrared sensor (20) is disposed on the side facing the cooling chamber (7) for receiving IR radiation from the refrigerated and frozen goods stored in the cooling chamber (7), and that processing electronics (25) are provided for correcting the temperature measurements measured by the infrared sensor (20) relative to a temperature offset by means of at least one stored correction curve.

2. The shipping container according to Claim 1, **characterized in that** the infrared sensor (20) is disposed in an aperture (12) in a container wall (2, 4, 5, 6).

3. The shipping container according to Claim 2, **characterized in that** the lens (21) of the infrared sensor (20) is disposed in the aperture (12).

4. The shipping container according to any one of the preceding claims, **characterized in that** the temperature measurement device (15) comprises a display device (30) on the outer side of the wall (9), a signal wire (29b) leading from the infrared sensor (20) to the display device (30) through an aperture (12) in a container wall (2, 4, 5, 6).

5. The shipping container according to any one of the preceding claims, **characterized in that** the display device (30) is disposed in a cavity (11) on the outer side of the wall (9).

6. The shipping container according to any one of the preceding claims, **characterized in that** the infrared sensor (20) and the display device (30) are disposed on a mounting device (40) that is at least partially inserted in an aperture (12) in a container wall (2, 4, 5, 6).

7. The shipping container according to Claim 6, **characterized in that** the mounting device (40) comprises an at least partially hollow neck (42), that said neck (42) is inserted into the aperture (12), and that the infrared sensor (20) and/or the display device (30) are disposed in the neck (42).

8. The shipping container according to any one of the preceding claims, **characterized in that** the mounting device (40) is supported in the aperture (12) by means of a retainer (45).

9. The shipping container according to Claim 8, **characterized in that** the retainer (45) is designed as a cap nut.

10. The shipping container according to any one of the preceding claims, **characterized in that** the mounting device (40) and the retainer (45) are disposed in the side wall (5) at a variable distance to each other.

11. The shipping container according to any one of the preceding claims, **characterized in that** the retainer (45) is disposed rotatably on the inner side of the side wall (5) and that the mounting device (40) is disposed in a rotationally fixed manner in the aperture (12).

12. The shipping container according to any one of the preceding claims, **characterized in that** the mounting device comprises two receivers, the infrared sensor (20) being disposed in a first receiver and the display device (30) being disposed in a second receiver, where the first and the second receiver can be connected to each other.

13. The shipping container according to any one of the preceding claims, **characterized in that** the measurement device (15) is disposed in the door (5).

14. The shipping container according to any one of the preceding claims, **characterized in that** a data logger (36) is connected to the infrared sensor (20) for storing measurements that are recorded successively chronologically.

15. The shipping container according to any one of the preceding claims, **characterized in that** a radio module (39a; 39b) is connected to the infrared sensor (20) and/or the data logger (36).

16. The shipping container according to any one of the preceding claims, **characterized in that** the current temperature value can be indicated on a display (32) of the temperature display device (30).

17. The shipping container according to any one of the preceding claims, **characterized in that** the highest temperature value reached after loading and closing the cooling chamber (7) can be indicated.

18. The shipping container according to any one of the preceding claims, **characterized in that** a temperature limit exceedance can be indicated.

19. A temperature measurement device for measuring the temperature in the cooling chamber (7) of a shipping container (1), having an infrared sensor (20) designed for receiving IR radiation from refrigerated and frozen goods stored in the cooling chamber (7), having a display device (30) for disposing on an outer side of a wall (9) of the container (1) and a signal line (29b) leading from the infrared sensor (20) to the display device (30), processing electronics (25) being provided for correcting the temperature measurements measured by the infrared sensor (20) relative to a temperature offset by means of at least one stored correction curve.

20. The temperature measurement device according to Claim 19, **characterized in that** the infrared sensor (20) and the display device (30) are disposed in a mounting device (40) that can be inserted in an aperture (12) in a wall (5) of the shipping container (1).

21. The temperature measurement device according to Claim 20, **characterized in that** the mounting device (40) jointly receives the infrared sensor, particularly designed as an infrared sensor (20), and the display device (30).

22. The temperature measurement device according to Claim 21, **characterized in that** the common mounting device (40) is mounted in the aperture (12) by means of a retainer (45).

23. The temperature measurement device according to Claim 22, **characterized in that** the mounting device (40) and the retainer (45) can be detachably connected to each other.

24. The temperature measurement device according to Claim 23, **characterized in that** the connection is designed as a threaded connection.

25. The temperature measurement device according to any one of the Claims 19-24, **characterized in that** the mounting device comprises two separate receivers that can be coupled to each other, one each for the infrared sensor (20) and the display device (30).

26. The temperature measurement device according to any one of the Claims 19-25, **characterized by** a data logger (36) that is connected to the infrared sensor (20) for storing successively recorded measurements.

27. The temperature measurement device according to any one of the Claims 19-26, **characterized in that** a radio module (39a; 39b) is connected to the infrared sensor (20) and/or the data logger (36).

28. The temperature measurement device according to any one of the claims 19-27, **characterized in that** the display device (30) is designed for indicating the current temperature value.

29. The temperature measurement device according to any one of the claims 19-28, **characterized in that** the display device (30) is designed for indicating the highest temperature value reached after loading and closing the cooling chamber (7).

30. The temperature measurement device according to any one of the Claims 19-29, **characterized in that** the display device (30) is designed for indicating a temperature limit value exceedance.

## Revendications

1. Conteneur de transport pour le transport de denrées alimentaires réfrigérées ou surgelées, appelé isotainer, avec une paroi de fond (2), des parois latérales (4, 5) et une paroi de couvercle (6) et avec au moins un compartiment de réfrigération (7) entouré par les parois (2, 4, 5, 6), sachant qu'une paroi latérale se présente sous la forme d'une porte (5) pour le remplissage et le vidage du compartiment de réfrigération (7), **caractérisé en ce qu'**un dispositif de mesure de température (15) avec un capteur infrarouge (20) est disposé sur la face orientée vers le compartiment de réfrigération (7) pour recevoir un rayonnement infrarouge depuis les denrées alimentaires réfrigérées et surgelées contenues dans le compartiment de réfrigération (7), et qu'il est prévu une électronique de traitement (25), laquelle corrige les valeurs de température mesurées par le capteur infrarouge (20) au moyen au moins d'une courbe de correction enregistrée par rapport à un offset de température.

2. Conteneur de transport selon la revendication 1, **caractérisé en ce que** le capteur infrarouge (20) est disposé dans une perforation (12) dans une paroi de conteneur (2, 4, 5, 6).

3. Conteneur de transport selon la revendication 2, **caractérisé en ce que** la lentille (21) du capteur infrarouge (20) est disposée dans la perforation (12).

4. Conteneur de transport selon l'une quelconque des revendications précédentes, **caractérisé en ce que** le dispositif de mesure de température (15) comporte un dispositif d'affichage (30) sur la face extérieure de la paroi (9), sachant qu'une ligne de transmission de signaux (29b) conduit du capteur infrarouge (20) à travers la perforation (12) dans une paroi du conteneur (2, 4, 5, 6) au dispositif d'affichage (30).

5. Conteneur de transport selon l'une quelconque des revendications précédentes, **caractérisé en ce que** le dispositif d'affichage (30) est disposé dans un creux (11) sur la face extérieure de paroi (9).

6. Conteneur de transport selon l'une quelconque des revendications précédentes, **caractérisé en ce que** le capteur infrarouge (20) et le dispositif d'affichage (30) sont disposés à un dispositif de retenue (40), lequel est enfoncé au moins partiellement dans une perforation (12) dans une paroi de conteneur (2, 4, 5, 6).

7. Conteneur de transport selon la revendication 6, **caractérisé en ce que** le dispositif de retenue (40) comporte une saillie (42) au moins partiellement creuse, que ladite saillie (42) est enfoncée dans la perforation (12) et que le capteur infrarouge (20) et/ou le dispositif d'affichage (30) est/sont disposé(s) dans la saillie (42).

8. Conteneur de transport selon l'une quelconque des revendications précédentes, **caractérisé en ce que** le dispositif de retenue (40) est monté dans la perforation (12) au moyen d'une plaquette d'arrêt (45).

9. Conteneur de transport selon la revendication 8, **caractérisé en ce que** la plaquette d'arrêt (45) se présente sous la forme d'un écrou-raccord.

10. Conteneur de transport selon l'une quelconque des revendications précédentes, **caractérisé en ce que** le dispositif de retenue (40) et la plaquette d'arrêt (45) sont disposés à une distance variable l'un de l'autre dans la paroi latérale (5).

11. Conteneur de transport selon l'une quelconque des revendications précédentes, **caractérisé en ce que** la plaquette d'arrêt (45) est monté d'une manière rotative sur la face intérieure de la paroi latérale (5) et que le dispositif de retenue (40) est monté d'une manière résistante à la rotation dans la perforation (12).

12. Conteneur de transport selon l'une quelconque des revendications précédentes, **caractérisé en ce que** le dispositif de retenue comporte deux logements, sachant que le capteur infrarouge (20) est disposé dans un premier logement et que le dispositif d'affichage (30) est disposé dans un second logement, sachant que le premier et le second logements peuvent être reliés l'un à l'autre.

13. Conteneur de transport selon l'une quelconque des revendications précédentes, **caractérisé en ce que** le dispositif de mesure (15) est disposé dans la porte (5).

14. Conteneur de transport selon l'une quelconque des revendications précédentes, **caractérisé en ce qu'**un enregistreur de données (36) est relié au capteur infrarouge (20) pour la mémorisation des valeurs de mesure enregistrées chronologiquement.

15. Conteneur de transport selon l'une quelconque des revendications précédentes, **caractérisé en ce qu'**un module radio (39a ; 39b) est relié au capteur infrarouge (20) et/ou à l'enregistreur de données (36).

16. Conteneur de transport selon l'une quelconque des revendications précédentes, **caractérisé en ce que** la valeur de température actuelle peut être affichée à l'afficheur (32) du dispositif d'affichage de température (30).

17. Conteneur de transport selon l'une quelconque des revendications précédentes, **caractérisé en ce que** la valeur de température la plus élevée, atteinte après le chargement et la fermeture du compartiment de réfrigération (7), peut être affichée.

18. Conteneur de transport selon l'une quelconque des revendications précédentes, **caractérisé en ce qu'**un dépassement de la valeur limite de température peut être affiché.

19. Dispositif de mesure de température pour la mesure de la température dans le compartiment de réfrigération (7) d'un conteneur de transport (1), avec un capteur infrarouge (20), lequel se présente sous une forme permettant de recevoir un rayonnement infrarouge depuis les denrées alimentaires réfrigérées ou surgelées contenues dans le compartiment de réfrigération (7), avec dispositif d'affichage (30) pour la disposition à une face extérieure de paroi (9) du conteneur (1), ainsi qu'une ligne de transmission de signaux (29b) conduisant du capteur infrarouge (20) au dispositif d'affichage (30), sachant qu'il est prévu une électronique de traitement (25), laquelle corrige les valeurs de température mesurées par le capteur infrarouge (20) au moyen au moins d'une courbe de correction enregistrée par rapport à un offset de température.

20. Dispositif de mesure de température selon la revendication 19, **caractérisé en ce que** le capteur infrarouge (20) et le dispositif d'affichage (30) sont disposés dans un dispositif de retenue (40), lequel peut être inséré dans une perforation (12) dans une paroi (5) du conteneur de transport (1).

21. Dispositif de mesure de température selon la revendication 20, **caractérisé en ce que** le dispositif de retenue (40) accueille ensemble le capteur infrarouge, se présentant particulièrement sous la forme du capteur infrarouge (20), et le dispositif d'affichage (30).

22. Dispositif de mesure de température selon la revendication 21, **caractérisé en ce que** le dispositif de retenue commun (40) est fixé au moyen d'une plaquette d'arrêt (45) dans la perforation (12).

23. Dispositif de mesure de température selon la revendication 22, **caractérisé en ce que** le dispositif de retenue (40) et la plaquette d'arrêt (45) peuvent être reliés l'un à l'autre d'une manière détachable.

24. Dispositif de mesure de température selon la revendication 23, **caractérisé en ce que** la connexion se présente sous la forme d'une connexion par vis.

25. Dispositif de mesure de température selon l'une quelconque des revendications 19-24, **caractérisé en ce que** le dispositif de retenue comporte deux logements séparés, pouvant être couplés l'un à l'autre, pour, respectivement, le capteur infrarouge (20) et le dispositif d'affichage (30).

26. Dispositif de mesure de température selon l'une quelconque des revendications 19-25, **caractérisé par** un enregistreur de données (36), lequel est relié au capteur infrarouge (20) pour la mémorisation de valeurs de mesure enregistrées chronologiquement.

27. Dispositif de mesure de température selon l'une quelconque des revendications 19-26, **caractérisé en ce qu'**un module radio (39a ; 39b) est relié au capteur infrarouge (20) et/ou à l'enregistreur de données (36).

28. Dispositif de mesure de température selon l'une quelconque des revendications 19-27, **caractérisé en ce que** le dispositif d'affichage (30) se présente sous une forme permettant d'afficher la valeur de température actuelle.

29. Dispositif de mesure de température selon l'une quelconque des revendications 19-28, **caractérisé en ce que** le dispositif d'affichage (30) se présente sous une forme permettant d'afficher la valeur de température la plus élevée, atteinte après le chargement et la fermeture du compartiment de réfrigération (7).

30. Dispositif de mesure de température selon l'une quelconque des revendications 19-29, **caractérisé en ce que** le dispositif d'affichage (30) se présente sous une forme permettant d'afficher un dépassement de la valeur limite de température.
